# EUROPEAN PATENT APPLICATION

(11) **EP 4 596 189 A1**
(43) Date of publication of application: **06.08.2025**
(21) Application number: 23879791.4
(22) Date of filing: 17.10.2023
(51) Int. Cl.: B25J 19/06

(54) **ROBOT SYSTEM**

(30) Priority: 19.10.2022 JP 2022167407
(71) Applicant: KAWASAKI JUKOGYO KABUSHIKI KAISHA, Kobe-shi, Hyogo 650-8670 (JP)
(72) Inventor: TAGASHIRA, Tsuyoshi, Kobe-shi, Hyogo 650-8670 (JP); ARAMOTO, Masao, Kobe-shi, Hyogo 650-8670 (JP)
(74) Representative: Müller-Boré & Partner Patentanwälte PartG mbB
(86) International application number: PCT/JP2023/037564
(87) International publication number: WO 2024/085148

(57) **Abstract**

A robot system (100) includes a robot (10), a drive (12), a first controller (21) configured or programmed to control operation of the robot (10), and a second controller (22) configured or programmed to control power to be supplied to the drive (12) based on a command from the first controller (21). Each of the first controller (21) and the second controller (22) is configured or programmed to mutually monitor an operating state of each other and detect an abnormality in the operation of the robot (10), and output a stop command to stop operation of the drive (12) when an operational abnormality, which is an abnormality in at least one of the operating state or the operation of the robot (10), is detected.

## Description

### Technical Field

The present disclosure relates to a robot system, and more particularly, it relates to a robot system including a controller that controls the operation of a robot.

### Background Art

Conventionally, a robot system including a controller that controls the operation of a robot is known. For example, Japanese Patent No. 3114579 discloses an industrial robot controller. This industrial robot controller includes a main CPU and a servo CPU. The main CPU outputs a speed command signal for a robot. The servo CPU operates a servomotor for each axis of the robot at a speed indicated by the speed command signal from the main CPU. In the industrial robot controller described in Japanese Patent No. 3114579, a comparison means is provided in each of the main CPU and the servo CPU. The comparison means compares an actual speed calculated based on a signal from an encoder for acquiring the rotation amount of the servomotor for each axis of the robot with a command speed commanded by the main CPU. Then, in each of the main CPU and the servo CPU, an abnormality occurrence process is performed when the comparison result exceeds an allowable value.

### Prior Art

### Patent Document

Patent Document 1: Japanese Patent No. 3114579

### Summary of the Invention

However, in the industrial robot controller described in Japanese Patent No. 3114579, rotation of the servomotor is controlled by the servo CPU based on the command from the main CPU, and thus when an abnormality occurs in the main CPU, the command itself output from the main CPU to the servo CPU becomes abnormal, and it is conceivable that the control of the servomotor is not performed normally. In such a case, even when the command from the main CPU is compared with the actual rotation speed of the servomotor as in Japanese Patent No. 3114579, it is difficult to accurately detect an abnormality in the operation of the robot. Therefore, when the operation of the robot is controlled using two different controllers, it is desired to accurately detect an abnormality in the operation of the robot.

The present disclosure is intended to solve the above problems. The present disclosure aims to provide a robot system capable of accurately detecting an abnormality in the operation of a robot when the operation of the robot is controlled using two different controllers.

A robot system according to an aspect of the present disclosure includes a robot, a drive operable to serve as a driving source to drive the robot, a first controller configured or programmed to control operation of the robot, and a second controller configured or programmed to control power to be supplied to the drive based on a command from the first controller. Each of the first controller and the second controller is configured or programmed to mutually monitor an operating state of each other and detect an abnormality in the operation of the robot, and output a stop command to stop operation of the drive when an operational abnormality, which is an abnormality in at least one of the operating state or the operation of the robot, is detected.

In the robot system according to the aspect of the present disclosure, as described above, each of the first controller and the second controller is configured or programmed to mutually monitor the operating state of each other and detect the abnormality in the operation of the robot, and output the stop command to stop the operation of the drive when the operational abnormality, which is the abnormality in at least one of the operating state or the operation of the robot, is detected. Accordingly, when the operation of the robot is controlled by two different controllers, the first controller and the second controller, the first controller and the second controller mutually monitor the operating state of each other such that the abnormality occurring in each of the first controller and the second controller can be detected by the other. Therefore, each of the first controller and the second controller, which have been confirmed to be free of any abnormality, can detect the abnormality in the operation of the robot. Consequently, when the operation of the robot is controlled using two different controllers, the abnormality in the operation of the robot can be accurately detected.

According to the present disclosure, it is possible to accurately detect an abnormality in the operation of the robot when the operation of the robot is controlled using two different controllers.

### Brief Description of the Drawings

FIG. 1 is a schematic view showing the overall configuration of a robot system according to an embodiment.
FIG. 2 is a block diagram showing the overall configuration of the robot system according to the embodiment.
FIG. 3 is a diagram for illustrating the arrangements of a first controller, a second controller, and a stop controller in a robot controller.
FIG. 4 is a block diagram for illustrating the configurations of the first controller, the second controller, and the stop controller in the robot controller.
FIG. 5 is a flowchart for illustrating a control method for the robot system when an operational abnormality is detected.

### Modes for Carrying Out the Invention

An embodiment embodying the present disclosure is hereinafter described on the basis of the drawings.

### Overall Configuration of Robot System

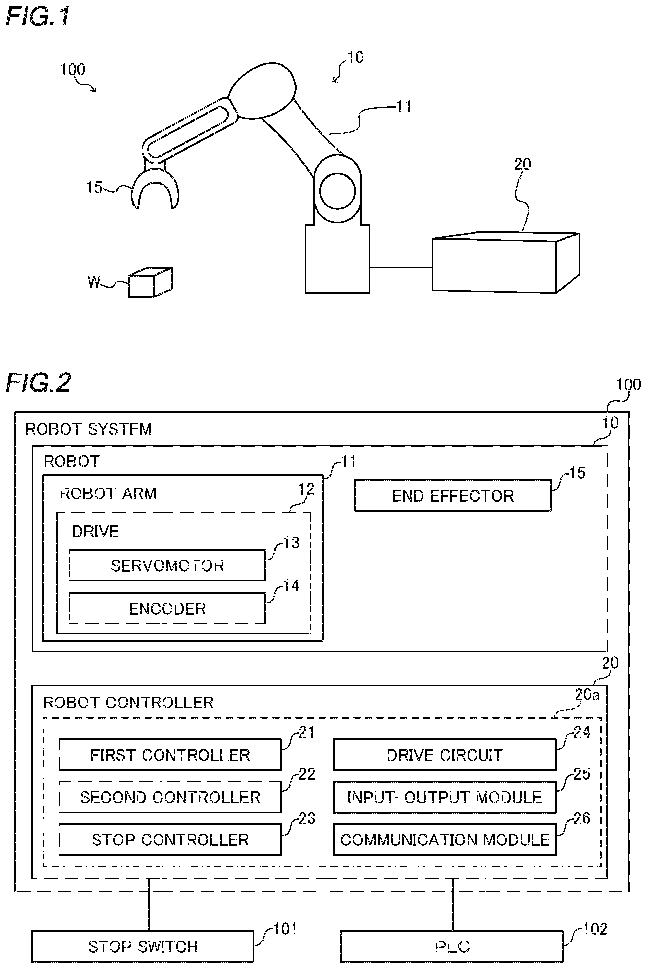

The configuration of a robot system 100 according to the embodiment is now described with reference to FIGS. 1 to 4.

As shown in FIG. 1, the robot system 100 includes a robot 10 and a robot controller 20. The robot system 100 performs workpiece W transport work, for example. The robot 10 includes a robot arm 11. An end effector 15 that performs the transport work is attached to the robot arm 11. The end effector 15 is a robot hand that grips the workpiece W, for example. The robot 10 is connected to the robot controller 20 and operates under the control of the robot controller 20. The robot 10 is a 6-axis vertical articulated robot, for example.

As shown in FIG. 2, the robot controller 20 includes a first controller 21, a second controller 22, a stop controller 23, a drive circuit 24, an input-output module 25, and a communication module 26. The first controller 21, the second controller 22, the stop controller 23, the drive circuit 24, the input-output module 25, and the communication module 26 are arranged inside a housing 20a of the robot controller 20. The housing 20a has a rectangular parallelepiped shape. The robot controller 20 is connected to an external stop switch 101 and a programmable logic controller (PLC) 102.

A drive 12 is arranged in the robot arm 11. The drive 12 is a driving source for driving the robot 10. That is, the drive 12 drives the robot arm 11. The robot arm 11 is rotated and is moved by the drive 12. The drive 12 includes a servomotor 13 and an encoder 14. The servomotor 13 rotates when power is supplied thereto. The servomotor 13 includes a rotation shaft that rotates by three-phase AC power, for example. The encoder 14 detects the rotation angle of the servomotor 13. The encoder 14 outputs a detection value indicating the detected rotation angle of the servomotor 13 to the first controller 21 and the second controller 22. Specifically, a signal indicating the detection value from the encoder 14 is input to the second controller 22. Then, the signal indicating the detection value is input to the first controller 21 via the second controller 22. In the robot arm 11 of the robot 10, two arm portions extending linearly are connected to each other via a joint. The end effector 15 is attached to an end of the arm portion on the distal end side via a separate joint. The robot arm 11 is connected to a base. A separate joint is also provided on the base side of the robot arm 11. The drive 12 is provided at each of the joints. Specifically, six drives 12 are provided in the robot 10, which is a 6-axis vertical articulated robot. The encoder 14 is an example of a rotation angle detector.

In this embodiment, the first controller 21 controls the operation of the robot 10. Specifically, the first controller 21 is a main controller that controls the overall operation of the robot 10. The second controller 22 controls power to be supplied to the drive 12 based on a command from the first controller 21. In other words, the second controller 22 is a servo controller that controls the operation of the servomotor 13. The stop controller 23 performs a control to stop the operation of the drive 12. The stop controller 23 controls the stopping of the operation of the robot 10 as a third party based on signals from the first controller 21 and the second controller 22, separately from the first controller 21 and the second controller 22. The first controller 21, the second controller 22, and the stop controller 23 perform a control using programs and parameters stored in a storage 31a described below. The control by the first controller 21, the second controller 22, and the stop controller 23 is described below in detail.

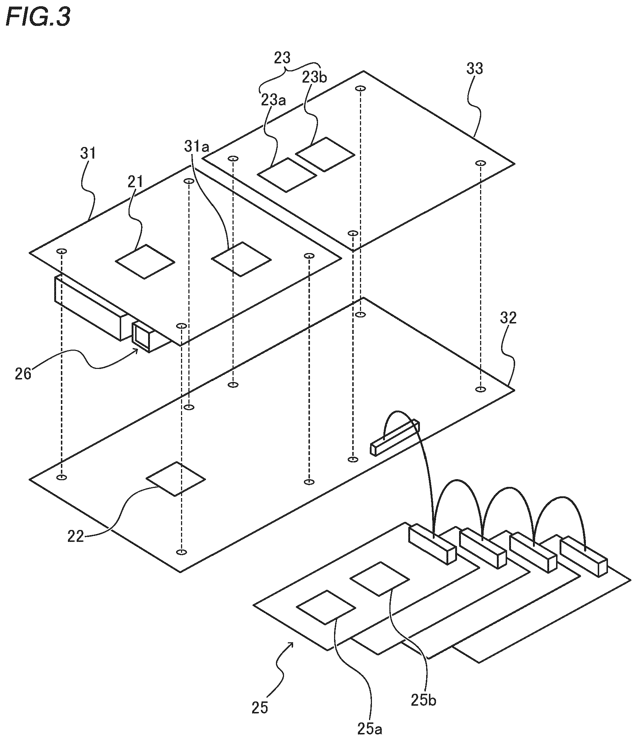

As shown in FIG. 3, the first controller 21, the second controller 22, and the stop controller 23 are each arranged on a separate substrate. Specifically, the first controller 21 is arranged on a first substrate 31. The second controller 22 is arranged on a second substrate 32. The stop controller 23 is arranged on a third substrate 33. The first substrate 31 is connected to each of the second substrate 32 and the third substrate 33.

The first controller 21 includes a central processing unit (CPU), for example. Similarly to the first controller 21, the second controller 22 includes a CPU, for example. In addition to the first controller 21 and the second controller 22, a power supply integrated circuit (IC) (not shown) and a storage device such as a random access memory (RAM) are arranged on each of the first substrate 31 and the second substrate 32. The storage 31a is also arranged on the first substrate 31. The storage 31a stores programs and parameters performed in the first controller 21 and the second controller 22. The storage 31a includes a flash memory such as CFast, for example. The stop controller 23 includes a first stop controller 23a and a second stop controller 23b separately. Each of the first stop controller 23a and the second stop controller 23b includes a complex programmable logic device (CPLD), for example.

The first controller 21 and the second controller 22 mutually transmit and receive signals. The first controller 21 and the second controller 22 transmit and receive signals by serial communication, for example. The first controller 21 also transmits and receives signals to and from each of the first stop controller 23a and the second stop controller 23b of the stop controller 23. The second controller 22 transmits and receives signals to and from each of the first stop controller 23a and the second stop controller 23b of the stop controller 23 via the first controller 21. For example, the first controller 21 transmits and receives signals to and from each of the first stop controller 23a and the second stop controller 23b by parallel communication via a 16-bit bus. The first controller 21 converts a signal acquired from the second controller 22 by serial communication into a 16-bit bus such that the second controller 22 transmits and receives signals to and from each of the first stop controller 23a and the second stop controller 23b via the first controller 21.

The first substrate 31 on which the first controller 21 is arranged is disposed so as to overlap the second substrate 32 on which the second controller 22 is arranged in the thickness direction of the substrate. The third substrate 33 on which the stop controller 23 is arranged is disposed so as to overlap the second substrate 32 in the thickness direction of the substrate, and is disposed adjacent to the first substrate 31.

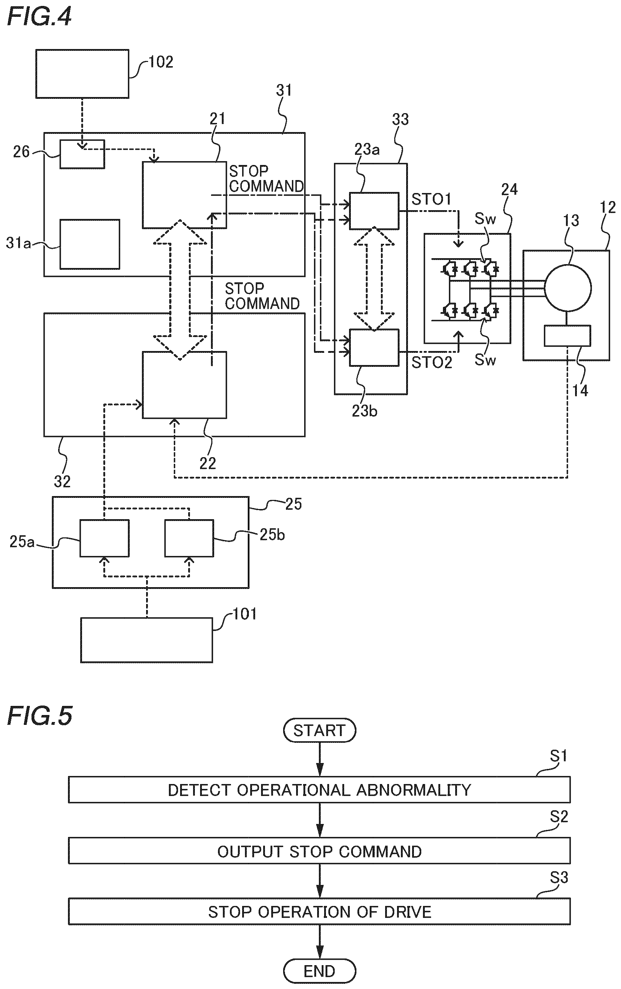

As shown in FIG. 4, the drive circuit 24 supplies power to the drive 12. Specifically, the drive circuit 24 includes an inverter circuit that supplies AC power to the servomotor 13 of the drive 12. The drive circuit 24 includes a plurality of switching elements Sw. The switching operations of the plurality of switching elements Sw are controlled by the second controller 22. In the inverter circuit of the drive circuit 24, the upper arm side switching element Sw and the lower arm side switching element Sw, which are connected in series to each other, are connected in parallel. The plurality of switching elements Sw include three upper arm side switching elements Sw and three lower arm side switching elements Sw for each drive 12 so as to supply three-phase AC power to the servomotor 13. That is, the drive circuit 24 includes a plurality of inverter circuits corresponding to a plurality of drives 12, respectively, so as to supply a current to each of the plurality of drives 12.

As shown in FIG. 3, the input-output module 25 is disposed on a substrate separate from the first substrate 31, the second substrate 32, and the third substrate 33. The input-output module 25 receives a signal from outside the robot controller 20. For example, a stop switch 101 outside the robot controller 20 is connected to the input-output module 25. The input-output module 25 includes a connection terminal (not shown) that is connected to the outside of the robot controller 20. The input-output module 25 also includes a plurality of substrates. In the input-output module 25, a plurality of inputs and outputs are connected to one substrate. The input-output module 25 is connected to the second substrate 32 on which the second controller 22 is arranged. A signal from the input-output module 25 is input to the second substrate 32 so as to be acquired by the second controller 22, and is output to the first controller 21 via the second controller 22. Thus, the signal from the input-output module 25 is acquired by each of the first controller 21 and the second controller 22.

The input-output module 25 also includes a first signal generator 25a and a second signal generator 25b. Each of the first signal generator 25a and the second signal generator 25b includes a field programmable gate array (FPGA), for example. Each of the first signal generator 25a and the second signal generator 25b outputs a signal indicating a received input signal to the second controller 22. In the input-output module 25, the first signal generator 25a and the second signal generator 25b perform the same control process. That is, the input-output module 25 has a redundant circuit configuration for a safety function. The input-output module 25 also includes a diagnostic circuit (not shown) for a safety function.

The communication module 26 is disposed on the first substrate 31. The communication module 26 is connected to an external device via a network. For example, the communication module 26 communicates with the PLC 102. The communication module 26 transmits and receives signals to and from the PLC 102 via a network such as a local area network (LAN). The robot controller 20 is connected to the PLC 102 via the communication module 26 by a safety communication network. The communication module 26 includes a connection terminal that is connected to the external device via the network. The communication module 26 outputs a signal input from the external device such as the PLC 102 via the network to the first controller 21. The signal from the communication module 26 is acquired by the first controller 21 and output to the second controller 22 via the first controller 21 so as to be acquired by each of the first controller 21 and the second controller 22.

The stop switch 101 receives an input operation by an operator. Specifically, the stop switch 101 receives a stop operation by the operator to stop the operation of the robot 10. Based on the stop operation by the operator, the stop switch 101 outputs a stop signal to the input-output module 25 to stop the operation of the drive 12 in order to stop the operation of the robot 10. The PLC 102 is a safety controller that communicates with the robot controller 20. Based on a signal from a detection device such as a laser scanner or a light curtain, the PLC 102 outputs a stop signal to the communication module 26 via a network to stop the operation of the drive 12 in order to stop the operation of the robot 10.

### Control During Transport Work

The first controller 21 controls the operation of the robot 10 based on a signal from a higher-level control device (not shown), for example. The first controller 21 outputs a command to the second controller 22 to control the operation of the drive 12 in order to operate the robot arm 11 including the end effector 15. The first controller 21 and the second controller 22 control the operation of the robot 10 to control the workpiece W transport work of the robot 10.

For example, the first controller 21 acquires a signal indicating the position of the workpiece W from the higher-level control device (not shown) in order to carry out the workpiece W transport work of the robot 10. Based on the acquired signal, the first controller 21 calculates the rotation speed of the servomotor 13 in the drive 12 to move the end effector 15 to the position of the workpiece W. Then, the first controller 21 outputs a speed command indicating the calculated rotation speed to the second controller 22 as a command for controlling the operation of the drive 12. Based on the speed command acquired from the first controller 21, the second controller 22 calculates a specific current value of the current to be input to the drive 12. Then, the second controller 22 controls the switching operations of the switching elements Sw by controlling gate signals input to gate terminals of the switching elements Sw of the drive circuit 24 such that a current of the calculated current value is supplied to the drive 12. The second controller 22 controls the current to be supplied to each of the plurality of drives 12 arranged in the robot arm 11 of the robot 10 based on the speed command.

### Control During Detection of Operational Abnormality

As shown in FIG. 4, the first controller 21, the second controller 22, and the stop controller 23 perform a control to stop the operation of the robot 10 when an operational abnormality is detected that is an abnormality in at least one of the operating states of the first controller 21 and the second controller 22 or the operation of the robot 10. In this embodiment, the first controller 21 and the second controller 22 independently monitor the operating state of each other and detect abnormalities in the operation of the robot 10. Then, each of the first controller 21 and the second controller 22 outputs a stop command to the stop controller 23 separately to stop the operation of the drive 12 when an operational abnormality is detected that is an abnormality in at least one of the operating states of the first controller 21 and the second controller 22 or the operation of the robot 10. The stop controller 23 stops the operation of the drive 12 based on the stop command from the first controller 21 and the second controller 22.

In order to detect an operational abnormality, the first controller 21 and the second controller 22 each acquire a common input and perform a common arithmetic process to detect the operational abnormality. When an operational abnormality is detected, the first controller 21 and the second controller 22 each output a similar stop command to the first stop controller 23a and the second stop controller 23b. That is, the first controller 21 and the second controller 22 are each redundant in order to detect an operational abnormality. When at least one of the stop command from the first controller 21 or the stop command from the second controller 22 is input to the stop controller 23, the stop controller 23 stops the operation of the drive 12.

### Monitoring of Operating Range and Operation Speed

Each of the first controller 21 and the second controller 22 detects the operating range and operation speed of the robot 10 as monitoring targets for detecting an operational abnormality. Then, each of the first controller 21 and the second controller 22 outputs a stop command when detecting that the robot 10 is operating outside the range of preset parameters. In this embodiment, each of the first controller 21 and the second controller 22 detects an operational abnormality based on the position of the robot arm 11, the movement speed of the robot arm 11, the orientation of the end effector 15, and a determination of whether or not the robot arm 11 is stopped.

Specifically, each of the first controller 21 and the second controller 22 detects the position of the robot arm 11, the movement speed of the robot arm 11, and the orientation of the end effector 15 based on the detection value from the encoder 14. Then, each of the first controller 21 and the second controller 22 detects an abnormality in the operation of the robot 10 when the detected position of the robot arm 11 exceeds an operating range set in advance as a parameter. Furthermore, each of the first controller 21 and the second controller 22 detects an abnormality in the operation of the robot 10 when the detected movement speed of the robot arm 11 is higher than a threshold speed set in advance as a parameter. In addition, each of the first controller 21 and the second controller 22 detects an abnormality in the operation of the robot 10 when the detected orientation of the end effector 15 exceeds a range set in advance as a parameter. Then, each of the first controller 21 and the second controller 22 detects an abnormality in the operation of the robot 10 when a command to stop the operation of the robot arm 11 is output and it is determined based on the detection value from the encoder 14 that the robot arm 11 is not stopped. When any of the above abnormalities in the operation of the robot 10 is detected, each of the first controller 21 and the second controller 22 determines that an abnormality in the operation of the robot system 100 has been detected and outputs a stop command.

### Comparison of Detection Value with Command Value

Each of the first controller 21 and the second controller 22 separately detects an operational abnormality by comparing the detection value indicating the rotation angle of the servomotor 13 detected by the encoder 14 with a command value based on the command output from the first controller 21 to the second controller 22 for controlling the operation of the drive 12.

The first controller 21 acquires an ideal detection value of the encoder 14 corresponding to the command for controlling the operation of the drive 12 output to the second controller 22 as the command value based on the command. Specifically, the first controller 21 calculates, based on the speed command output to the second controller 22, the detection value of the encoder 14 when the servomotor 13 rotates at a rotation speed indicated by the speed command, as the command value based on the command. That is, the first controller 21 acquires, as the command value based on the command, the ideal detection value of the encoder 14 acquired when the operation of the robot 10 is normal. In other words, the first controller 21 acquires, as a command value for the rotation speed based on the command, a detection value at the rotation speed of the servomotor 13 calculated to output the speed command. Then, the first controller 21 outputs the acquired command value to the second controller 22. Each of the first controller 21 and the second controller 22 compares the acquired command value with the detection value from the encoder 14 to calculate a difference between the command value and the detection value. Then, each of the first controller 21 and the second controller 22 detects an operational abnormality when the calculated difference is greater than a predetermined threshold that is set in advance as a parameter.

### Mutual Monitoring of Operating State

In this embodiment, the first controller 21 and the second controller 22 mutually monitor the operating state of each other. When the first controller 21 and the second controller 22 mutually monitor the operating state of each other and detect an abnormality in the operating state, each of the first controller 21 and the second controller 22 determines that an operational abnormality has been detected and outputs a stop command.

Specifically, each of the first controller 21 and the second controller 22 calculates both the position of the robot arm 11 and the movement speed of the robot arm 11 based on the detection value from the encoder 14. Then, each of the first controller 21 and the second controller 22 outputs the calculation results of both the position of the robot arm 11 and the movement speed of the robot arm 11 to each other to acquire the calculation results of the other. That is, the first controller 21 acquires the calculation results of the second controller 22, and the second controller 22 acquires the calculation results of the first controller 21. Then, each of the first controller 21 and the second controller 22 compares its own calculation results with the acquired calculation results of the other to mutually monitor the operating state of each other. Each of the first controller 21 and the second controller 22 outputs a stop command when an operational abnormality is detected based on the result of comparing the calculation results.

For example, each of the first controller 21 and the second controller 22 calculates the spatial position or angle of a flange to which the end effector 15 of the robot arm 11 is attached as the position of the robot arm 11, and the movement speed of the flange, based on the detection value from the encoder 14. Each of the first controller 21 and the second controller 22 acquires differences between the calculation results of each other as comparison results. Each of the first controller 21 and the second controller 22 determines that an operational abnormality has occurred when the acquired differences are greater than predetermined thresholds that are preset parameters. Each of the first controller 21 and the second controller 22 determines that an operational abnormality has been detected and outputs a stop command when it is determined that the operational abnormality has occurred based on the result of comparing the calculation results.

### Stop Signal from Outside

Each of the first controller 21 and the second controller 22 outputs a stop command based on the stop signal from outside. The robot controller 20 includes the input-output module 25 to receive a stop signal for stopping the operation of the drive 12. Specifically, each of the first signal generator 25a and the second signal generator 25b of the input-output module 25 generates an abnormality signal indicating that an abnormality has been detected based on the stop signal received based on a stop operation on the stop switch 101. Then, each of the first signal generator 25a and the second signal generator 25b outputs the generated abnormality signal to each of the first controller 21 and the second controller 22. When receiving the abnormality signal from the first signal generator 25a and the second signal generator 25b, each of the first controller 21 and the second controller 22 determines that an operational abnormality has been detected and outputs a stop command. A plurality of devices or equipment may be connected to the input-output module 25.

Each of the first controller 21 and the second controller 22 outputs a stop command when a stop signal is acquired via the communication module 26. That is, each of the first controller 21 and the second controller 22 outputs a stop command when a stop signal is acquired via the communication module 26 arranged separately from the input-output module 25. For example, a stop signal is input to the communication module 26 from the PLC 102, which is an external device, via the network. Each of the first controller 21 and the second controller 22 determines that an operational abnormality has been detected and outputs a stop command based on the stop signal from the PLC 102 acquired via the communication module 26.

The CPU included in each of the first controller 21 and the second controller 22 includes a plurality of cores. In each of the first controller 21 and the second controller 22, one of the plurality of cores of the CPU performs a process to detect an operational abnormality. The remaining core(s), which is/are different from the core performing the process to detect an operational abnormality, controls/control the transport work of the robot 10, for example.

### Stopping of Operation of Drive by Stop Controller

As shown in FIG. 4, when an operational abnormality is detected, each of the first controller 21 and the second controller 22 outputs a stop command to each of the first stop controller 23a and the second stop controller 23b of the stop controller 23. Then, each of the first stop controller 23a and the second stop controller 23b stops the operation of the drive circuit 24 that supplies power to the drive 12 based on the stop command from each of the first controller 21 and the second controller 22.

Specifically, each of the first stop controller 23a and the second stop controller 23b stops a gate signal input to the gate terminal of each of the switching elements Sw of the drive circuit 24 in order to stop the drive circuit 24. The first stop controller 23a outputs a safety torque off 1 signal (STO1 signal) to stop the operations of the upper arm side switching elements Sw. The second stop controller 23b outputs a safety torque off 2 signal (STO2 signal) to stop the operations of the lower arm side switching elements Sw. In the drive circuit 24, the switching operations of the upper arm side switching elements Sw and the lower arm side switching elements Sw are turned off by the STO1 signal and the STO2 signal, respectively. That is, when the STO1 signal is output from the first stop controller 23a, the switching operations of the upper arm side switching elements Sw of the drive circuit 24 are turned off. When the STO2 signal is output from the second stop controller 23b, the switching operations of the lower arm side switching elements Sw of the drive circuit 24 are turned off. Thus, when at least one of the STO1 signal or the STO2 signal is acquired, the power supplied from the drive circuit 24 to the drive 12 is cut off. In this manner, the stop controller 23 is also redundant by the first stop controller 23a and the second stop controller 23b.

Even when the first stop controller 23a and the second stop controller 23b do not receive stop commands from the first controller 21 and the second controller 22, the first stop controller 23a and the second stop controller 23b stop the operation of the drive 12 when at least one of an abnormality in the operating states of the first controller 21 and the second controller 22 or an abnormality in the operation of the robot 10 is detected. For example, each of the first stop controller 23a and the second stop controller 23b monitors a signal from the first controller 21, and when an abnormality occurs in the signal from the first controller 21, each of the first stop controller 23a and the second stop controller 23b stops the operation of the drive 12. For example, each of the first stop controller 23a and the second stop controller 23b monitors the signal from the first controller 21 using a watchdog timer. When a normal signal is not input from the first controller 21 at a predetermined timing, each of the first stop controller 23a and the second stop controller 23b determines that an abnormality has occurred in the first controller 21 and stops the operation of the drive 12.

Each of the first stop controller 23a and the second stop controller 23b mutually monitors the operating state of each other by transmitting and receiving signals to and from each other. Specifically, the first stop controller 23a and the second stop controller 23b output the STO1 signal and the STO2 signal to each other. That is, the STO1 signal from the first stop controller 23a is acquired by the second stop controller 23b, and the STO2 signal from the second stop controller 23b is acquired by the first stop controller 23a. Then, for example, when an abnormality such as the STO1 signal or the STO2 signal being stuck in a high state is detected, each of the first stop controller 23a and the second stop controller 23b determines that an operational abnormality has been detected and stops the operation of the drive 12.

In addition to the above, each of the first stop controller 23a and the second stop controller 23b of the stop controller 23 determines that an operational abnormality has been detected and stops the operation of the drive 12 when an operation signal instructing stop is received from a stop switch (not shown) arranged on the outer surface of the housing 20a of the robot controller 20, or when an abnormality in temperature inside the housing 20a is detected, for example.

### Control Method when Abnormality is Detected in Robot System

A control method for the robot system 100 when an operational abnormality is detected is now described with reference to FIG. 5. A process of the control method for the robot system 100 when this operational abnormality is detected is performed by the first controller 21, the second controller 22, and the stop controller 23.

First, in step S1, each of the first controller 21 and the second controller 22 detects an operational abnormality, which is an abnormality in at least one of the operating states of the first controller 21 and the second controller 22 or the operation of the robot 10. Specifically, based on the set parameters stored in advance in the storage 31a and the detection value from the encoder 14 of each of the plurality of drives 12, a control process to monitor the operating range and operation speed of the robot 10, a control process to compare the detection value with the command value based on the command for controlling the operation of the drive 12, and a control process to mutually monitor the operating state of each other of the first controller 21 and the second controller 22 are performed such that an operational abnormality is detected. In addition, based on inputs from the input-output module 25 and the communication module 26, an operational abnormality is detected.

Next, in step S2, each of the first controller 21 and the second controller 22 outputs a stop command to the stop controller 23. Specifically, each of the first controller 21 and the second controller 22 outputs a similar stop command to each of the first stop controller 23a and the second stop controller 23b of the stop controller 23.

Next, in step S3, the first stop controller 23a and the second stop controller 23b output the STO1 signal and the STO2 signal to the drive circuit 24, respectively, to stop the operation of the drive 12.

The control process operations from step S1 to step S3 are repeatedly performed at a predetermined sampling interval while the robot 10 performs work.

### Advantages of Embodiment

According to this embodiment, the following advantages are achieved.

In the robot system 100, each of the first controller 21 and the second controller 22 is configured or programmed to mutually monitor the operating state of each other and detect an abnormality in the operation of the robot 10, and output a stop command to stop the operation of the drive 12 when an operational abnormality, which is an abnormality in at least one of the operating state or the operation of the robot 10, is detected. Accordingly, when the operation of the robot 10 is controlled by two different controllers, the first controller 21 and the second controller 22, the first controller 21 and the second controller 22 mutually monitor the operating state of each other such that an abnormality occurring in each of the first controller 21 and the second controller 22 can be detected by the other. Therefore, each of the first controller 21 and the second controller 22, which have been confirmed to be free of any abnormality, can detect an abnormality in the operation of the robot 10. Consequently, when the operation of the robot 10 is controlled using two different controllers, an abnormality in the operation of the robot 10 can be accurately detected.

The robot system 100 includes the stop controller 23 separate from the first controller 21 and the second controller 22 and configured or programmed to perform a control to stop the operation of the drive 12. Each of the first controller 21 and the second controller 22 is configured or programmed to output a stop command to the stop controller 23 separately when an operational abnormality is detected. Accordingly, the stop controller 23 separate from the first controller 21 and the second controller 22 can stop the operation of the drive 12 based on the stop command output from each of the first controller 21 and the second controller 22. Therefore, the operation of the drive 12 can be reliably stopped by the stop controller 23 separately from the control process of the first controller 21 and the second controller 22. Consequently, an abnormality in the operation of the robot 10 can be accurately detected, and the operation of the drive 12 can be reliably stopped when an abnormality is detected.

The robot system 100 includes the drive circuit 24 to supply power to the drive 12. The stop controller 23 includes the first stop controller 23a and the second stop controller 23b. Each of the first controller 21 and the second controller 22 is configured or programmed to output a stop command to each of the first stop controller 23a and the second stop controller 23b when an operational abnormality is detected, and each of the first stop controller 23a and the second stop controller 23b is configured or programmed to stop the operation of the drive circuit 24 based on the stop command. Accordingly, the stop controller 23 is redundant by the first stop controller 23a and the second stop controller 23b, and thus even when an abnormality occurs in either the first stop controller 23a or the second stop controller 23b of the stop controller 23, the operation of the drive 12 can be stopped by stopping the operation of the drive circuit 24 through a control by the other stop controller that is not abnormal. Therefore, when an operational abnormality occurs, the operation of the drive 12 can be more reliably stopped.

Each of the first stop controller 23a and the second stop controller 23b is configured or programmed to mutually monitor the operating state of each other by transmitting and receiving signals to and from each other. Accordingly, an abnormality occurring in either the first stop controller 23a or the second stop controller 23b can be detected by the other, and thus the operation of the robot 10 can be suppressed while an abnormality remains in either the first stop controller 23a or the second stop controller 23b.

The drive 12 includes the servomotor 13 operable to rotate when power is supplied thereto, and the encoder 14 to detect the rotation angle of the servomotor 13. Each of the first controller 21 and the second controller 22 is configured or programmed to detect an operational abnormality separately by comparing a detection value indicating the rotation angle of the servomotor 13 detected by the encoder 14 with the command value based on the command for controlling the operation of the drive 12 output from the first controller 21 to the second controller 22, and output a stop command separately when an operational abnormality is detected. Accordingly, each of the first controller 21 and the second controller 22 that mutually monitor the operating state of each other compares the detection value indicating the rotation angle of the servomotor 13 with the command value based on the command for controlling the operation of the drive 12, and thus each of the first controller 21 and the second controller 22, which have been confirmed to be free of any abnormality, can more reliably compare the detection value with the command value. Therefore, when the operation of the robot 10 is controlled by each of two different controllers, an abnormality in the operation of the robot 10 can be more accurately detected.

The robot system 100 includes the input-output module 25 to receive a stop signal for stopping the operation of the drive 12. The input-output module 25 includes the first signal generator 25a and the second signal generator 25b, each of which is configured or programmed to generate an abnormality signal indicating that an abnormality has been detected based on the received stop signal, and each of the first signal generator 25a and the second signal generator 25b is operable to output the generated abnormality signal to each of the first controller 21 and the second controller 22. Accordingly, a stop signal from an external device or an external operation unit such as the stop switch 101 can be acquired via the input-output module 25. Therefore, the first signal generator 25a and the second signal generator 25b, which output an abnormality signal in the input-output module 25, are redundant, and thus when a stop signal from the outside is received in the input-output module 25, an abnormality signal can be more reliably output to the first controller 21 and the second controller 22. Consequently, when a stop signal is received, the operation of the drive 12 can be more reliably stopped.

The robot system 100 includes the communication module 26 to allow a stop signal for stopping the operation of the drive 12 to be input thereto from an external device. Each of the first controller 21 and the second controller 22 is configured or programmed to output a stop command based on the stop signal acquired via the communication module 26. Accordingly, a stop signal can be acquired from an external device via the communication module 26, and thus the drive 12 can be stopped by communicating with an external device that detects, for example, entry of the robot 10 into a work area or the locked state of a door provided in the work area. Therefore, even when the robot system 100 is operated in combination with another manufacturing system or the like, the operation of the drive 12 can be reliably stopped.

The robot 10 includes the robot arm 11 to which the end effector 15 operable to perform work is attached. The drive 12 is operable to drive the robot arm 11. Each of the first controller 21 and the second controller 22 is configured or programmed to detect an operational abnormality based on at least two of the position of the robot arm 11, the movement speed of the robot arm 11, the orientation of the end effector 15, and a determination of whether or not the robot arm 11 is stopped, and output a stop command when an operational abnormality is detected. Accordingly, each of the first controller 21 and the second controller 22, which mutually monitor the operating state of each other, detects an operational abnormality based on at least two of the position of the robot arm 11, the movement speed of the robot arm 11, the orientation of the end effector 15, and a determination of whether or not the robot arm 11 is stopped, and thus each of the first controller 21 and the second controller 22, which have been confirmed to be free of any abnormality, can more reliably detect an operational abnormality based on a plurality of types of determination criteria. Therefore, when the operation of the robot 10 is controlled using two different controllers, an abnormality in the operation of the robot 10 can be more accurately detected.

The drive 12 includes the servomotor 13 operable to rotate when power is supplied thereto, and the encoder 14 to detect the rotation angle of the servomotor 13. The robot 10 includes the robot arm 11 to which the end effector 15 operable to perform work is attached. Each of the first controller 21 and the second controller 22 is configured or programmed to calculate at least one of the position or the movement speed of the robot arm 11 operable to move by the operation of the drive 12 based on the detection value indicating the rotation angle of the servomotor 13 detected by the encoder 14, output the calculation result of at least one of the position of the robot arm 11 or the movement speed of the robot arm 11 to each other to acquire the calculation result of the other, compare its own calculation result with the acquired calculation result of the other to mutually monitor the operating state of each other, and output a stop command when an operational abnormality is detected based on the result of comparing the calculation results. Accordingly, the first controller 21 and the second controller 22 can mutually monitor the operating state of each other by comparing the calculation results of each other, and can stop the operation of the drive 12 when it is determined that an abnormality has occurred in either the first controller 21 or the second controller 22 based on the result of comparing the calculation results. Therefore, the first controller 21 and the second controller 22 can mutually monitor whether or not an abnormality occurs in the arithmetic processes by the first controller 21 and the second controller 22, and thus an abnormality in the operation of the robot 10 can be more accurately detected.

### Modified Examples

The embodiment disclosed this time must be considered as illustrative in all points and not restrictive. The scope of the present disclosure is not shown by the above description of the embodiment but by the scope of claims for patent, and all modifications (modified examples) within the meaning and scope equivalent to the scope of claims for patent are further included.

For example, while the example in which the stop controller 23, which is provided separately from the first controller 21 and the second controller 22, outputs a signal to the drive circuit 24 to stop the operation of the drive 12 has been shown in the aforementioned embodiment, the present disclosure is not limited to this. In the present disclosure, the signal for stopping the operation of the drive may be output directly from each of the first controller and the second controller to the drive circuit without providing the stop controller. Furthermore, while the example in which a stop command from the second controller 22 is input to the stop controller 23 via the first controller 21 has been shown, a stop command may be output directly from both the first controller and the second controller to the stop controller.

While the example in which the stop controller 23 is redundant by two stop controllers, the first stop controller 23a and the second stop controller 23b, has been shown in the aforementioned embodiment, the present disclosure is not limited to this. In the present disclosure, the stop controller may not be redundant, or the stop controller may be redundant by three or more arithmetic units or processing circuitries.

While the example in which a speed command is output from the first controller 21 to the second controller 22, an ideal detection value corresponding to the speed command output from the first controller 21 is acquired as a command value based on the speed command, and an operational abnormality is detected by comparing the command value based on the speed command with the detection value of the encoder 14 has been shown in the aforementioned embodiment, the present disclosure is not limited to this. In the present disclosure, the command for controlling the operation of the drive output from the first controller to the second controller may not be a speed command indicating the rotation speed. The command for controlling the operation of the drive may be, for example, a torque command indicating the magnitude of the torque of the servomotor, or a command for the number of rotations of the servomotor. Furthermore, while the example in which the command value based on the speed command is acquired by the first controller and output to the second controller has been shown, each of the first controller and the second controller may calculate a command value corresponding to an ideal detection value based on a command.

While the example in which the input-output module 25 receives a signal from the stop switch 101 has been shown in the aforementioned embodiment, the present disclosure is not limited to this. In the present disclosure, the input-output module may receive an input from a detection device such as a laser scanner or a light curtain, or a switch that detects the locked state of a door provided in the robot's work area, for example. Alternatively, the input-output module may not be provided.

While the example in which each of the first controller 21 and the second controller 22 detects an operational abnormality based on the position of the robot arm 11, the movement speed of the robot arm 11, the orientation of the end effector 15, and a determination of whether or not the robot arm 11 is stopped has been shown in the aforementioned embodiment, the present disclosure is not limited to this. In the present disclosure, each of the first controller and the second controller may be configured to detect an operational abnormality based on at least two of the position of the robot arm, the movement speed of the robot arm, the orientation of the end effector, and a determination of whether or not the robot arm is stopped.

While the example in which each of the first controller 21 and the second controller 22 outputs the calculation results of the position of the robot arm 11 and the movement speed of the robot arm 11 to each other to acquire the calculation results of the other, and compare its own calculation results with the acquired calculation results of the other to mutually monitor the operating state of each other has been shown in the aforementioned embodiment, the present disclosure is not limited to this. In the present disclosure, each of the first controller and the second controller may compare the calculation result of at least one of the position of the robot arm or the movement speed of the robot arm to mutually monitor the operating state of each other.

While the example in which the gate signal input to the switching elements Sw of the drive circuit 24 I stopped and the switching operation is turned off such that power supplied to the drive 12 is cut off and the operation of the drive 12 is stopped has been shown in the aforementioned embodiment, the present disclosure is not limited to this. In the present disclosure, the operation of the drive may be stopped by cutting off the power supplied to the drive using a switch such as an electromagnetic contactor or a circuit breaker.

While the example in which the operation of the robot 10, which is a 6-axis vertical articulated robot that transports the workpiece W, is controlled has been shown in the aforementioned embodiment, the present disclosure is not limited to this. In the present disclosure, a robot that performs manufacturing or processing may be controlled. Alternatively, the robot may be a vertical articulated robot having the number of axes other than six, or a horizontal articulated robot capable of transporting a semiconductor substrate. Alternatively, a robot that does not include a robot arm and operates using a linear motion mechanism may be controlled. Furthermore, while the example in which the operation of the robot is controlled by a signal input from a higher-level control device to the first controller has been shown, a command may be output from the first controller to the second controller based on preset parameters stored in the storage.

While the example in which the end effector 15 attached to the robot arm 11 is a robot hand that grips the workpiece W has been shown in the aforementioned embodiment, the present disclosure is not limited to this. In the present disclosure, the end effector attached to the robot arm may be a paint gun, a tool for tightening screws, an imager, or a detection sensor, for example. In other words, the work performed by the robot using the end effector may be not only transport work, but also painting work, manufacturing and assembly work, imaging work, or inspection work, for example.

While the example in which a signal from the input-output module 25 is input to the second controller 22 and is input to the first controller 21 via the second controller 22, and a signal from the communication module 26 is input to the first controller 21 and is input to the second controller 22 via the first controller 21 has been shown in the aforementioned embodiment, the present disclosure is not limited to this. In the present disclosure, conversely, a signal from the input-output module may be input to the first controller and be input to the second controller via the first controller, and a signal from the communication module may be input to the second controller and be input to the first controller via the second controller. Alternatively, both a signal from the input-output module and a signal from the communication module may be input to the first controller and be input to the second controller via the first controller, or both may be input to the second controller and be input to the first controller via the second controller. Alternatively, signals from the input-output module and the communication module may be directly input to both the first controller and the second controller.

While the example in which the first controller 21, the second controller 22, and the stop controller 23 are arranged on different substrates has been shown in the aforementioned embodiment, the present disclosure is not limited to this. In the present disclosure, two or all of the first controller, the second controller, and the stop controller may be arranged on a common substrate. Alternatively, the second controller may be arranged on each of a plurality of substrates for each of a plurality of servomotors. That is, a plurality of second controllers may be provided corresponding to the number of servomotors.

While the example in which the first controller 21, the second controller 22, and the stop controller 23 are each arranged in the robot controller 20 has been shown in the aforementioned embodiment, the present disclosure is not limited to this. In the present disclosure, the second controller may be arranged on the robot arm side. For example, the second controller and the drive circuit may be arranged on the robot arm. Furthermore, a portion of the process performed by the first controller may be performed by a control device such as a computer external to the robot controller.

The functionality of the elements disclosed herein may be implemented using circuitry or processing circuitry that includes general purpose processors, special purpose processors, integrated circuits, application specific integrated circuits (ASICs), conventional circuitry and/or combinations thereof that are configured or programmed to perform the disclosed functionality. Processors are considered processing circuitry or circuitry as they include transistors and other circuitry therein. In the present disclosure, the circuitry, units, or means are hardware that carries out the recited functionality or hardware that is programmed to perform the recited functionality. The hardware may be hardware disclosed herein or other known hardware that is programmed or configured to carry out the recited functionality. When the hardware is a processor that may be considered a type of circuitry, the circuitry, means, or units are a combination of hardware and software, and the software is used to configure the hardware and/or processor.

For example, each of the first controller and the second controller may include an arithmetic unit or processing circuitry other than a CPU. Furthermore, each of the first stop controller and the second stop controller of the stop controller may include an arithmetic unit or processing circuitry other than a CPLD. Moreover, each of the first signal generator and the second signal generator of the input-output module may include an arithmetic unit or processing circuitry other than an FPGA.

### Aspects

It will be appreciated by those skilled in the art that the exemplary embodiments described above are specific examples of the following aspects.

### (Item 1)

A robot system comprising:
a robot;
a drive operable to serve as a driving source to drive the robot;
a first controller configured or programmed to control operation of the robot; and
a second controller configured or programmed to control power to be supplied to the drive based on a command from the first controller; wherein
each of the first controller and the second controller is configured or programmed to:
   mutually monitor an operating state of each other and detect an abnormality in the operation of the robot; and
   output a stop command to stop operation of the drive when an operational abnormality, which is an abnormality in at least one of the operating state or the operation of the robot, is detected.

### (Item 2)

The robot system according to item 1, further comprising:
a stop controller separate from the first controller and the second controller and configured or programmed to perform a control to stop the operation of the drive; wherein
each of the first controller and the second controller is configured or programmed to output the stop command to the stop controller separately when the operational abnormality is detected.

### (Item 3)

The robot system according to item 2, further comprising:
a drive circuit to supply power to the drive; wherein
the stop controller includes a first stop controller and a second stop controller;
each of the first controller and the second controller is configured or programmed to output the stop command to each of the first stop controller and the second stop controller when the operational abnormality is detected; and
each of the first stop controller and the second stop controller is configured or programmed to stop operation of the drive circuit based on the stop command.

### (Item 4)

The robot system according to item 3, wherein each of the first stop controller and the second stop controller is configured or programmed to mutually monitor the operating state of each other by transmitting and receiving a signal to and from each other.

### (Item 5)

The robot system according to any one of items 1 to **4,** wherein
the drive includes a servomotor operable to rotate when power is supplied thereto, and a rotation angle detector to detect a rotation angle of the servomotor; and
each of the first controller and the second controller is configured or programmed to detect the operational abnormality separately by comparing a detection value indicating the rotation angle of the servomotor detected by the rotation angle detector with a command value based on a command for controlling the operation of the drive output from the first controller to the second controller, and output the stop command separately when the operational abnormality is detected.

### (Item 6)

The robot system according to any one of items 1 to **5,** further comprising:
an input-output module to receive a stop signal for stopping the operation of the drive; wherein
the input-output module includes a first signal generator and a second signal generator, each of which is configured or programmed to generate an abnormality signal indicating that an abnormality has been detected based on a received stop signal; and
each of the first signal generator and the second signal generator is operable to output a generated abnormality signal to each of the first controller and the second controller.

### (Item 7)

The robot system according to any one of items 1 to **6,** further comprising:
a communication module to allow a stop signal for stopping the operation of the drive to be input thereto from an external device; wherein
each of the first controller and the second controller is configured or programmed to output the stop command based on the stop signal acquired via the communication module.

### (Item 8)

The robot system according to any one of items 1 to **7,** wherein
the robot includes a robot arm to which an end effector operable to perform work is attached;
the drive is operable to drive the robot arm; and
each of the first controller and the second controller is configured or programmed to detect the operational abnormality based on at least two of a position of the robot arm, a movement speed of the robot arm, an orientation of the end effector, and a determination of whether or not the robot arm is stopped, and output the stop command when the operational abnormality is detected.

### (Item 9)

The robot system according to any one of items 1 to 8, wherein
the drive includes a servomotor operable to rotate when power is supplied thereto, and a rotation angle detector to detect a rotation angle of the servomotor;
the robot includes a robot arm to which an end effector operable to perform work is attached; and
each of the first controller and the second controller is configured or programmed to:
   calculate at least one of a position or a movement speed of the robot arm operable to move by the operation of the drive based on a detection value indicating the rotation angle of the servomotor detected by the rotation angle detector;
   output a calculation result of at least one of the position of the robot arm or the movement speed of the robot arm to each other to acquire the calculation result of the other;
   compare its own calculation result with an acquired calculation result of the other to mutually monitor the operating state of each other; and
   output the stop command when the operational abnormality is detected based on a result of comparing the calculation results.

## Claims

1. A robot system comprising:
a robot;
a drive operable to serve as a driving source to drive the robot;
a first controller configured or programmed to control operation of the robot; and
a second controller configured or programmed to control power to be supplied to the drive based on a command from the first controller; wherein
each of the first controller and the second controller is configured or programmed to:
mutually monitor an operating state of each other and detect an abnormality in the operation of the robot; and
output a stop command to stop operation of the drive when an operational abnormality, which is an abnormality in at least one of the operating state or the operation of the robot, is detected.

2. The robot system according to claim 1, further comprising:
a stop controller separate from the first controller and the second controller and configured or programmed to perform a control to stop the operation of the drive; wherein
each of the first controller and the second controller is configured or programmed to output the stop command to the stop controller separately when the operational abnormality is detected.

3. The robot system according to claim 2, further comprising:
a drive circuit to supply power to the drive; wherein
the stop controller includes a first stop controller and a second stop controller;
each of the first controller and the second controller is configured or programmed to output the stop command to each of the first stop controller and the second stop controller when the operational abnormality is detected; and
each of the first stop controller and the second stop controller is configured or programmed to stop operation of the drive circuit based on the stop command.

4. The robot system according to claim 3, wherein each of the first stop controller and the second stop controller is configured or programmed to mutually monitor the operating state of each other by transmitting and receiving a signal to and from each other.

5. The robot system according to claim **1,** wherein
the drive includes a servomotor operable to rotate when power is supplied thereto, and a rotation angle detector to detect a rotation angle of the servomotor; and
each of the first controller and the second controller is configured or programmed to detect the operational abnormality separately by comparing a detection value indicating the rotation angle of the servomotor detected by the rotation angle detector with a command value based on a command for controlling the operation of the drive output from the first controller to the second controller, and output the stop command separately when the operational abnormality is detected.

6. The robot system according to claim **1,** further comprising:
an input-output module to receive a stop signal for stopping the operation of the drive; wherein
the input-output module includes a first signal generator and a second signal generator, each of which is configured or programmed to generate an abnormality signal indicating that an abnormality has been detected based on a received stop signal; and
each of the first signal generator and the second signal generator is operable to output a generated abnormality signal to each of the first controller and the second controller.

7. The robot system according to claim 1, further comprising:
a communication module to allow a stop signal for stopping the operation of the drive to be input thereto from an external device; wherein
each of the first controller and the second controller is configured or programmed to output the stop command based on the stop signal acquired via the communication module.

8. The robot system according to claim 1, wherein
the robot includes a robot arm to which an end effector operable to perform work is attached;
the drive is operable to drive the robot arm; and
each of the first controller and the second controller is configured or programmed to detect the operational abnormality based on at least two of a position of the robot arm, a movement speed of the robot arm, an orientation of the end effector, and a determination of whether or not the robot arm is stopped, and output the stop command when the operational abnormality is detected.

9. The robot system according to claim 1, wherein
the drive includes a servomotor operable to rotate when power is supplied thereto, and a rotation angle detector to detect a rotation angle of the servomotor;
the robot includes a robot arm to which an end effector operable to perform work is attached; and
each of the first controller and the second controller is configured or programmed to:
calculate at least one of a position or a movement speed of the robot arm operable to move by the operation of the drive based on a detection value indicating the rotation angle of the servomotor detected by the rotation angle detector;
output a calculation result of at least one of the position of the robot arm or the movement speed of the robot arm to each other to acquire the calculation result of the other;
compare its own calculation result with an acquired calculation result of the other to mutually monitor the operating state of each other; and
output the stop command when the operational abnormality is detected based on a result of comparing the calculation results.
